# EUROPEAN PATENT APPLICATION

(11) **EP 2 518 326 A2**
(43) Date of publication of application: **31.10.2012**
(21) Application number: 12165428.9
(22) Date of filing: 25.04.2012
(51) Int. Cl.: F04D 29/28, F04D 29/30, F04D 29/44

(54) **Centrifugal compressor assembly with stator vane row**

(30) Priority: 28.04.2011 US 201113096295
(71) Applicant: General Electric Company, Schenectady, NY 12345 (US)
(72) Inventor: Moussa, Zaher Milad, Lynn, MA Massachusetts 01910 (US); Miller, David Paul, Lynn, MA Massachusetts 01910 (US); Parker, David Vickery, Lynn, MA Massachusetts 01910 (US)
(74) Representative: Williams, Andrew Richard

(57) **Abstract**

A compressor assembly for a gas turbine engine includes rotatable impeller (28, 28') with forward and aft ends, including: an annular hub (30) defining a generally concave-curved cross-sectional inner flowpath surface (44, 44') at its radially outer periphery, the inner flowpath surface (44, 44') extending between an inlet and an exit; an annular array of airfoil-shaped inducer blades (50, 50') extending radially outward from the inner flowpath surface (44, 44') near the forward end; and an annular array of exducer blades (60') extending outward from the inner flowpath surface (44, 44'), the array of exducer blades (60') axially spaced apart from the array of inducer blades (50, 50');outer flowpath surfacea non-rotating shroud assembly surrounding the impeller (28, 28') and including a convex-curved outer flowpath surface (72), wherein the inner and outer flowpath surfaces (44, 44', 72) cooperate to define a primary flowpath past the blades and the stator vanes; and an annular array of airfoil-shaped stator vanes extending radially inward from the outer flowpath surface (72) into a space between the inducer and exducer blades (60').

## Description

### BACKGROUND OF THE INVENTION

This invention relates generally to gas turbine engine turbines and more particularly to gas turbine engine compressors.

A centrifugal compressor is a known type of compressor used in a gas turbine engine. It includes a rotating impeller, to impart kinetic energy to a gas flowing through it, with a high swirl level (i.e. tangential velocity) at the impeller's exit. A stationary diffuser surrounds the impeller and deswirler system follows the diffuser. Collectively, the diffuser and the deswirler system function to convert the high kinetic energy received from the impeller into the more useful form of static pressure, turn the air flow in a meridional plane by 90 degrees or more, from an outward radial direction to a generally axial direction, and reduce the high tangential velocity component to a small value (typically less than 5 degrees).

A compressor's pressure ratio ("PR") is a ratio of the pressure at the exit to the pressure at the inlet. Increasing PR drives engines to higher thermodynamic efficiency, reducing specific fuel consumption ("SFC"). Increased PR is a function of increased tip speed, which in turn is a function of impeller rotational speed and impeller tip radius. Current technology high pressure ratio and high efficiency designs are often at or near mechanical limits for maximum allowable tip speeds, thus limiting any further increase in PR that could be achieved by increased speed. Further increase in pressure ratio may be obtained by larger radius centrifugal stages, but larger radius stages have an undesirable negative impact on engine weight and cost goals.

Accordingly, there is a need for a centrifugal impeller with high pressure ratios, high efficiency, and adequate stall margin, at a lower impeller tip speed.

### BRIEF SUMMARY OF THE INVENTION

This need is addressed by the present invention, which provides a centrifugal compressor stage with an impeller having separate exducer and inducer blades, with a row of stationary stator vanes disposed between them.

According to one aspect of the invention, a compressor assembly for a gas turbine engine is provided. The compressor assembly includes: a rotatable impeller with forward and aft ends, including: an annular hub defining a generally concave-curved cross-sectional inner flowpath surface at its radially outer periphery, the inner flowpath surface extending between an inlet and an exit; an annular array of airfoil-shaped inducer blades extending radially outward from the inner flowpath surface near the forward end; and an annular array of exducer blades extending outward from the inner flowpath surface, the array of exducer blades axially spaced apart from the array of inducer blades; a non-rotating shroud assembly surrounding the impeller and including a convex-curved outer flowpath surface, wherein the inner and outer flowpath surfaces cooperate to define a primary flowpath past the blades and the stator vanes; and an annular array of airfoil-shaped stator vanes extending radially inward from the outer flowpath surface into a space between the inducer and exducer blades.

### BRIEF DESCRIPTION OF THE DRAWINGS

The invention may be best understood by reference to the following description taken in conjunction with the accompanying drawing figures in which:
FIG. 1 is a schematic cross-sectional view of a gas turbine engine constructed in accordance with the present invention;
FIG. 2 is a cross-sectional view of a portion of a compressor of the engine of FIG. 1;
FIG. 3 is an enlarged view of a portion of FIG. 2;
FIG. 4 is a perspective of an impeller shown in FIG 2;
FIG. 5 is a cross-sectional view of an impeller showing an alternative flowpath surface configuration;
FIG. 6 is a perspective simplified diagram of a single exducer blade of an impeller; and
FIG. 7 is a front elevation simplified diagram of the exducer blade of FIG. 6

### DETAILED DESCRIPTION OF THE INVENTION

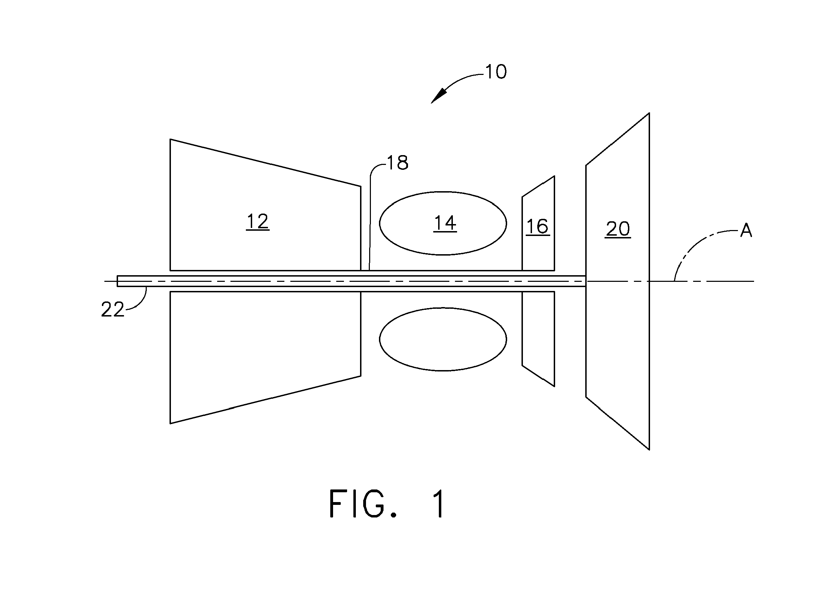

Referring to the drawings wherein identical reference numerals denote the same elements throughout the various views, Figure 1 depicts schematically a gas turbine engine 10 with a central longitudinal axis "A" and including in sequential flow sequence, a compressor 12, a combustor 14, and a gas generator turbine 16. As used herein, the terms "axial" and "longitudinal" both refer to a direction parallel to the axis A. The compressor 12 provides compressed air that passes primarily into the combustor 14 to support combustion and partially around the combustor 14 where it is used to cool both the combustor liners and turbomachinery further downstream. Fuel is introduced into the forward end of the combustor 14 and is mixed with the air in a conventional fashion. The resulting fuel-air mixture flows into the combustor 14 where it is ignited to generate hot combustion gases. The hot combustion gases are discharged to the gas generator turbine 16 where they are expanded so that energy is extracted. The gas generator turbine 16 drives the compressor 12 through an outer shaft 18. In the illustrated example, the engine 10 is a turboshaft engine and a work turbine (also called a power turbine) 20 is located downstream of the gas generator turbine 16 and coupled to an output shaft 22 which can be connected to a mechanical load. However, the principles described herein are equally applicable to any mixed-flow compressor.

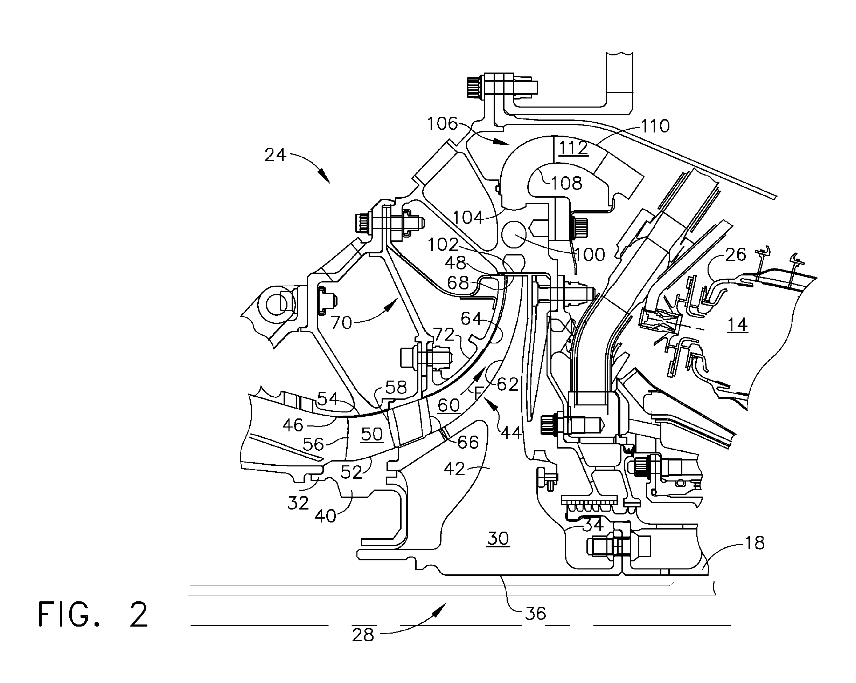

FIGS 2-4 illustrate a part of the compressor 12, specifically a centrifugal stage 24 which is disposed just upstream from a dome 26 of the annular-type combustor 14. It will be understood that one or more compressor stages (axial, centrifugal, or mixed-flow) of a conventional design may be located upstream of the centrifugal stage 24.

The centrifugal stage 24 includes an impeller 28 mounted for rotation with the outer shaft 18. The impeller 28 includes a hub 30 with axially forward and aft ends 32 and 34 and a central bore 36 passing axially therethrough. In the illustrated example the hub 30 is constructed from a forward section 40 and an aft section 42 secured together so they rotate as a unit, but they could be part of an integral assembly. An outer portion of the hub 30 defines a generally concave-curved inner flowpath surface 44. The inner flowpath surface 44 extends in a generally longitudinal direction towards the forward end 32 and extends in a generally radial direction near the aft end 34. The impeller 28 includes an inlet 46 and a downstream exit 48.

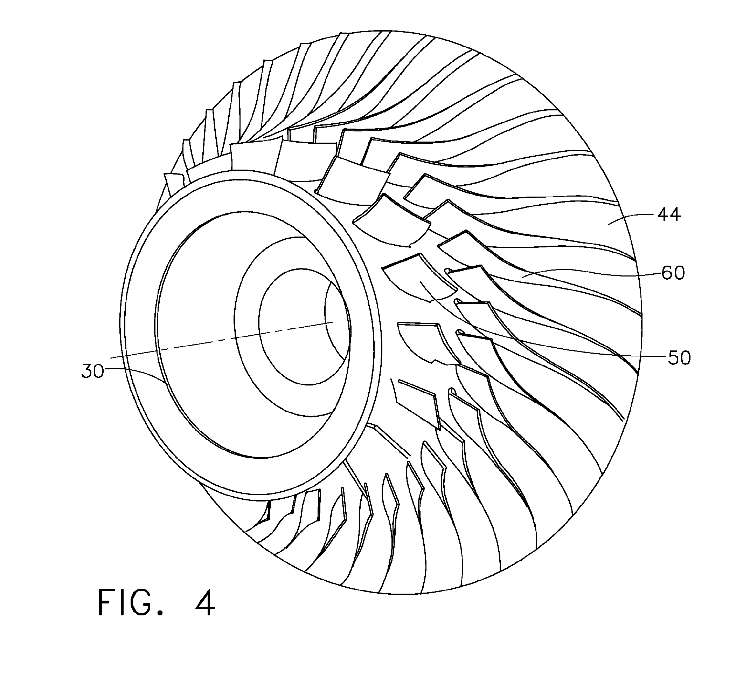

An annular array of inducer blades 50 extend radially outward from the inner flowpath surface 44, near the inlet 46. Each of the inducer blades 50 is airfoil-shaped (best seen in FIG. 4) and has a root 52, a tip 54, and leading and trailing edges 56 and 58, respectively. Opposed pressure and suction sides extend between the leading and trailing edges 56 and 58. The inducer blades 50 are configured in terms of their dimensions, cross-sectional shape, orientation, spacing, and other parameters (generally in accordance with conventional practice) to provide an incremental pressure increase to the air flowing past them as the impeller 28 rotates.

An annular array of exducer blades 60 extend radially outward from the inner flowpath surface 44. The exducer blades 60 are axially spaced away from the inducer blades 50 and generally follow the curve of the inner flowpath surface 44 in side elevation view. Each of the exducer blades 60 has a root 62, a tip 64, and leading and trailing edges 66 and 68, respectively. The exducer blades 60 are configured in terms of their dimensions, cross-sectional shape, orientation, spacing, and other parameters to provide an incremental pressure increase to the air flowing past them as the impeller 28 rotates.

An annular shroud assembly 70 surrounds the impeller 28. The shroud assembly 70 defines a generally convex-curved outer flowpath surface 72 that closely surrounds the tips of the inducer 50 and exducer blades 60. Together the inner and outer flowpath surfaces 44 and 72 define a primary flowpath "F" through the centrifugal stage 24.

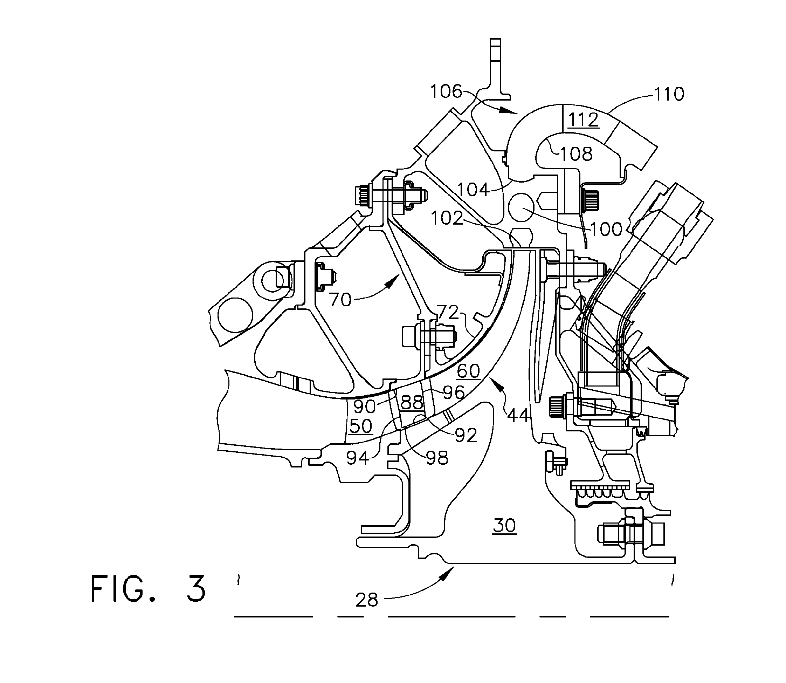

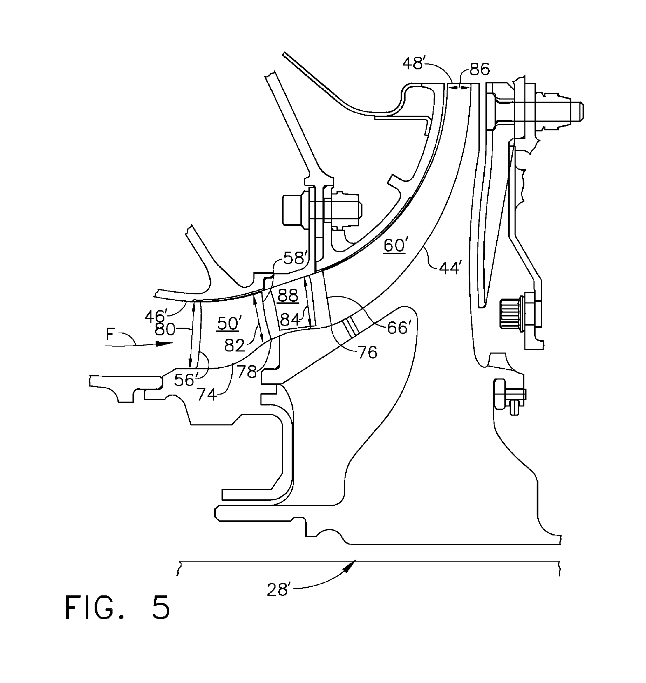

As depicted in FIGS. 2 and 3, the inner flowpath surface 44 is concave-curved along its entire length. As an optional alternative, the inner flowpath surface 44 may be configured to define a flowpath with a convex-curved convergent-divergent portion through the impeller 28. FIG. 5 shows an impeller 28' with an inlet 46' and exit 48', inducer blades 50', and exducer blades 60' with leading edges 66'. The impeller 28' includes an inner flowpath surface 44' which is configured in this alternate manner.

The inner flowpath surface 44' includes a first portion 74, and a second portion 76 that extends continuously downstream from first portion 74. The first portion 74 and second portion 76 are designed independently subject to a common interface, for example, the outlet of first portion 74 is the inlet to second portion 76. The first portion 74 is designed according to fan technology knowledge and second portion 76 is designed according to centrifugal compressor technology knowledge. In this embodiment the common interface approximately defines a location of the inducer leading edge, such that starting point for an integrally optimized flow path is defined. In the exemplary embodiment, first portion 74 extends upstream from leading edge 56 of the inducer blade 50' towards impeller inlet 46', and second portion 76 extends downstream from trailing edge 58' of the inducer blade 50' towards impeller exit 48'. The first portion 74 includes a radially-outwardly-protruding, convex-curved apex 78 near a trailing edge 58' of the inducer blade 50.

The cross-sectional area of the flowpath F is variable along the longitudinal length of the impeller 28. Specifically, flowpath F has a first cross-sectional area 80 defined between the inner and outer flowpath surfaces 44' and 72 at the inlet 46'. The flowpath F has a second cross-sectional area 82 defined between inner and outer flowpath surfaces 44' and 72 at apex 78. The flowpath F has a third cross-sectional area 84 defined downstream from apex 78, between the second portion 76 and the outer flowpath surface 72. The second cross-sectional area 82 is smaller than first cross-sectional area 80 but equal to or slightly larger than the third area 84. Finally, the impeller exit 48' has a fourth cross-sectional area 86 defined between the inner and outer flowpath surfaces 44' and 72 at the exit 48'. This cross-sectional area 86 is smaller than cross-sectional areas 80, 82, and 84.

The impeller work input that produces the required pressure ratio is known to be the product of the wheel linear metal speed and the air, or fluid, turning in the tangential direction. The wheel linear metal speed is the radius multiplied by rotational speed. This relationship applies locally as well globally (i.e. on an average basis from inlet to exit). A higher air, or fluid, turning is a result of a higher blade curvature. The radius of outer flowpath surface 72 is substantially greater than the radius of inner flowpath surface 44'. This is particularity noted at the near the inlet 46'. Therefore, it is common in prior art practice to balance the work input across the span of the inducer blade 50' at the leading edge by increasing the blade surface curvature (camber) near the inner flowpath surface. However, increased curvature produces a higher adverse pressure gradient (i.e. diffusion) that the flow may not be able to sustain, causing flow separation that may be local or global. If the flow separation is global it may be massive and extend to the exit. Flow separation is known to reduce both efficiency and stall margin (i.e. the safe operating flow range at speed). The inner flowpath surface 44 incorporating the apex 78 (referred to as a "fan-type" flowpath) essentially increases the average inducer metal speed at the location of the apex 78, so that blade curvature can be reduced, allowing production of efficient and higher-pressure ratio inducer blades 50' than an arrangement with a wholly-concave low hub.

Referring back to FIGS. 2 and 3, an annular array of stator vanes 88 extends radially inward from the outer flowpath surface 72. The stator vanes 88 project into the axial space between the inducer blades 50 and the exducer blades 60. Each of the stator vanes 88 is airfoil-shaped, and has a root 90, a tip 92, and leading and trailing edges 94 and 96, respectively. Opposed pressure and suction sides extend between the leading and trailing edges 94 and 96. The stator vanes 88 are configured in terms of their dimensions, cross-sectional shape, orientation, spacing, and other parameters (generally in accordance with conventional practice) to turn the air flowing past them and reduce the swirl (i.e. tangential velocity component) of the air exiting the inducer blades 50. Optionally, the inner flowpath surface 44 may incorporate a shroud section 98 configured to closely surround the tips 92 of the stator vanes 88 and prevent leakage. The shroud section 98 may incorporate an abradable material or other similar structure.

Introduction of the stator vanes 88 between the inducer blades 50 and exducer blades 60 reduces the flow swirl into the exducer blades 60, thereby increasing the amount of work input required by the exducer blades 60. This allows for a lower tip speed (and therefore lower impeller diameter) than a conventional impeller for the same pressure ratio. Reducing the exducer blades' inlet swirl increases their relative inlet flow angle (i.e. the angle between the longitudinal direction and the inlet flow direction).

This in turn increases the allowable blade angle β near the exducer blades' leading edges 64 and the wrap angle occupied by each exducer blade 60. This essentially increases the combined physical length of the inducer blades 50 and exducer blades 60 available for optimum diffusion. The result is efficiently increasing the pressure ratio more than what would be accomplished without the stator vanes 88.

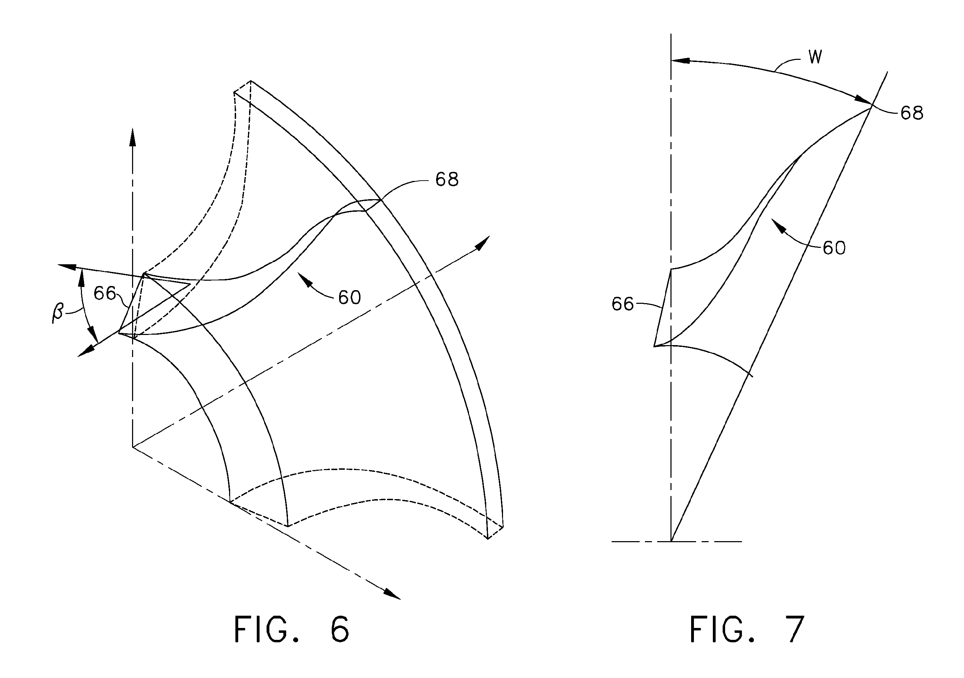

FIGS. 6 and 7 depict a single exducer blade 60 in a schematic form. As shown in FIG. 6, the blade angle β is defined as the angle between a tangent to the blade's mean-line and the longitudinal direction. As shown in FIG. 7, two radial lines originate at a center and pass through the leading and trailing edges 66 and 68 of the exducer blade 60. The angle between the two radial lines is the "wrap angle", denoted "W". The wrap angle W is indicative of the extent of the "footprint" of the exducer blade 60 on the outer flowpath surface 72. The exducer blades 60 of the present invention have a significantly increased wrap angle W as compared to prior art designs, for the same overall axial length and outside diameter of the impeller 28.

Referring back to FIGS. 2 and 3, stationary diffuser 100 is disposed in flow communication to the impeller exit 48 such that airflow exiting chamber the impeller 28 is channeled through the diffuser 100. The diffuser 100 extends radially outward from the impeller 28 and includes an inlet 102 and an outlet 104. A deswirler 106 is disposed in flow communication with the diffuser 100 and extends from diffuser outlet 104. The deswirler 106 comprises annular inner and outer walls 108 and 110 which form inner and outer boundaries of an arcuate flowpath that turns flow exiting the diffuser 100 from a radial direction to a generally axial direction. In the illustrated example, the air is turned through more than 90 degrees and has a radially-inward velocity component. The deswirler 106 contains an annular array of deswirler vanes 112 which are angled to remove swirl (i.e. tangential flow component) from the air exiting the diffuser 100.

Analysis indicates that the concepts described above will allow the construction of high pressure ratio, high specific speed centrifugal compressor stages with lower tip speeds, weight, and cost than would otherwise be required.

The foregoing has described a centrifugal compressor apparatus for a gas turbine engine. While specific embodiments of the present invention have been described, it will be apparent to those skilled in the art that various modifications thereto can be made without departing from the scope of the invention. Accordingly, the foregoing description of the preferred embodiment of the invention and the best mode for practicing the invention are provided for the purpose of illustration only and not for the purpose of limitation, the invention being defined by the claims.

## Claims

1. A compressor assembly (24) for a gas turbine engine (10), said compressor assembly comprising:
a rotatable impeller (28, 28') with forward (32) and aft (34) ends, comprising:
an annular hub (30) defining a generally concave-curved cross-sectional inner flowpath surface (44, 44') at its radially outer periphery, the inner flowpath surface (44, 44') extending between an inlet (46), and an exit (48);
an annular array of airfoil-shaped inducer blades (50, 50') extending radially outward from the inner flowpath surface (44, 44') near the forward end (32); and
an annular array of exducer blades (60') extending outward from the inner flowpath surface (44, 44'), the array of exducer blades (60') axially spaced apart from the array of inducer blades (50, 50');
a non-rotating shroud assembly (70) surrounding the impeller (28, 28') and including a convex-curved outer flowpath surface (72); and
an annular array of airfoil-shaped stator vanes (88) extending radially inward from the outer flowpath surface (72) into a space between the inducer and exducer blades (60');
wherein the inner and outer flowpath surfaces (44, 44', 72) cooperate to define a primary flowpath (F) past the blades and the stator vanes.

2. The assembly of claim 1 wherein the primary flowpath (F) comprises a variable area wherein a first cross-sectional area (80) is defined between the outer flowpath surface (72) and the inner flowpath surface (44, 44') at the inlet (46), and a second cross-sectional area (86) is defined at the exit (48), and the first cross-sectional area is greater than the second cross-sectional area.

3. The assembly of either of claim 1 or 2 wherein the inner flowpath surface (44, 44') includes a convex-curved convergent-divergent flow surface disposed between the inlet and the exit.

4. The assembly of claim 3 wherein the inner flowpath surface (44, 44') further comprises an apex (78) defined within the convex-curved convergent-divergent flow surface.

5. The assembly of claim 4 wherein a trailing edge (58) of each of the inducer blades (50, 50') is axially aligned with the apex (78).

6. The assembly of any preceding claim wherein the inner flowpath surface (44, 44') includes a shroud section (98) that closely surrounds tips (92) of the stator vanes (88).

7. The assembly of claim 6 further comprising an abradable material carried by the shroud section (98).

8. The assembly of any preceding claim further comprising a diffuser (100) disposed downstream of the exit (48) of the impeller (28, 28').

9. The assembly of claim 8 further comprising a deswirler (106) comprising an annular array of vanes (112) disposed downstream of the diffuser (100).

10. A gas turbine engine (10) comprising:
a compressor (12) including the assembly (24) of any of the preceding claims;
a combustor (14) disposed downstream of the compressor; and
a gas generator turbine (16) disposed downstream of the combustor and coupled to the compressor by a first shaft (18).

11. The gas turbine engine (10) of claim 10 further comprising:
a work turbine (20) disposed downstream of the combustor (14) and coupled to a second shaft (22) adapted to be connected to a mechanical load.
